(19) Europäisches Patentamt
European Patent Office
Office européen des brevets

(11) **EP 4 404 017 B1**

(12) **EUROPEAN PATENT SPECIFICATION**

(45) Date of publication and mention
of the grant of the patent:
**23.07.2025 Bulletin 2025/30**

(21) Application number: **21956838.3**

(22) Date of filing: **13.09.2021**

(51) International Patent Classification (IPC):
*G05D 1/00* (2024.01)          *G05D 1/693* (2024.01)
*G05D 109/30* (2024.01)

(52) Cooperative Patent Classification (CPC):
**G05D 1/693;** G05D 2109/38

(86) International application number:
**PCT/JP2021/033525**

(87) International publication number:
**WO 2023/037542 (16.03.2023 Gazette 2023/11)**

(54) **MOBILE ROBOT, MOVEMENT CONTROL DEVICE, METHOD, AND RECORDING MEDIUM**

MOBILER ROBOTER, BEWEGUNGSSTEUERUNGSVORRICHTUNG, VERFAHREN UND
AUFZEICHNUNGSMEDIUM

ROBOT MOBILE, DISPOSITIF DE COMMANDE DE MOUVEMENTS, PROCÉDÉ ET SUPPORT
D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.07.2024 Bulletin 2024/30**

(73) Proprietor: **NEC Corporation
108-8001 Tokyo (JP)**

(72) Inventor: **MACHIDA, Manao
Tokyo 108-8001 (JP)**

(74) Representative: **Betten & Resch
Patent- und Rechtsanwälte PartGmbB
Maximiliansplatz 14
80333 München (DE)**

(56) References cited:
JP-A- 2010 231 698        JP-A- 2019 003 510
KR-B1- 101 450 843        KR-B1- 101 450 843
US-A1- 2021 229 274

**Description**

TECHNICAL FIELD

The present invention relates to a mobile robot, a movement control device, a method, and a recording medium.

BACKGROUND ART

A system in which a plurality of robots move in cooperation with each other is referred to as a multi-agent system. In a multi-agent system, the robots communicate with each other to achieve cooperative motions. Among the cooperative motions, motions that maintain the safety of the robots include collision avoidance and maintaining communication between the robots.

In Non-Patent Document 1, a technique is disclosed that controls the movement of each robot such that the distance between the robots does not become closer than a predetermined safe distance $D_s$ in order to avoid collisions between the robots, and the distance between the robots does not become greater than a predetermined effective communication distance $D_c$ in order to maintain communication. Such a technique assumes that each robot knows the position and speed of the other robots in real-time.

Patent Documents

Non-Patent Document 1: Multi-objective compositions for collision-free connectivity maintenance in teams of mobile robots. Wang, L., Ames, A. D, & Egerstedt, M. In Decision and Control (CDC), 2016 IEEE 55th Conference on, pages 2659-2664, 2016. IEEE.

Non-Patent Document 2: A. Shinnoh, N. Y. Chong and G. Lee, "Communication packet loss concealment for pattern generation with robotic swarms," 2015 IEEE International Conference on Advanced Intelligent Mechatronics (AIM), 2015, pp. 537-542, doi: 10.1109/AIM.2015.7222590

US 2021/229274 A1 discloses a robot according to the preamble of claim 1.

SUMMARY OF THE INVENTION

Problems to be Solved by the Invention

When many robots communicate simultaneously in the same space, the amount of communication within the space is enormous. Therefore, there is a problem that packet loss occurs due to packet collisions, making real-time communication difficult.

Furthermore, the premise disclosed in Non-Patent Document 1, that is to say, the premise that each robot knows the position and speed of the other robots in real-time, no longer holds true. Therefore, the technique disclosed in Non-Patent Document 1 cannot achieve collision avoidance and the maintaining of communication when the number of robots increases.

Non-Patent Document 2 discloses a technique that, when information about the other robots cannot be acquired due to communication failure, predicts current information from the information that has been acquired from the robots. However, in this technique, the position and speed of the other robots acquired at the time of communication failure is a prediction. According to this technique, if the prediction is incorrect, collision avoidance and the maintaining of communication may not be achieved in some cases.

An example object of the present disclosure is to provide a mobile robot, a movement control device, a method, and a recording medium that solve the problems described above.

Means for Solving the Problem

(1) The present disclosure is a mobile robot including: a control unit that performs movement control for moving toward a target direction while remaining in a movable region representing a communicable region without a collision between an own robot and another robot; and a movable region calculation unit that calculates, from a state of the own robot and a state of the other robot, a first region where the own robot and the other robot do not collide, a second region where the own robot and the other robot are capable of communicating, and the movable region in which the first region and the second region overlap.

(2) The present disclosure is a movement control device including: a movable region calculation unit that calculates, from a state of a first robot and a state of a second robot, a first region where the first robot and the second robot do not collide, a second region where the first robot and the second robot are capable of communicating, and a movable region in which the first region and the second region overlap.

(3) The present disclosure is a method including: performing movement control for moving toward a target direction while remaining in a movable region representing a communicable region without a collision between an own robot and another robot; and calculating, from a state of the own robot and a state of the other robot, a first region where the own robot and the other robot do not collide, a second region where the own robot and the other robot are capable of communicating, and the movable region in which the first region and the second region overlap.

(4) The present disclosure is a recording medium that stores a program that executes processing of: performing movement control for moving toward a target direction while remaining in a movable region representing a communicable region without a collision between an own robot and another robot; and calculating, from a state of the own robot and a state of the other robot, a first region where the own robot and the other robot do not collide, a second region where the own robot and the other robot are capable of communicating, and the movable region in which the first region and the second region overlap.

Effects of Invention

According to the present invention, it is possible to achieve collision avoidance and the maintaining of communication between robots, while suppressing the amount of communication between the robots.

BRIEF DESCRIPTION OF THE DRAWINGS

[FIG. 1] FIG. 1 is a schematic diagram of a system according to a first example embodiment.
[FIG. 2] FIG. 2 is a schematic block diagram of a robot according to the present example embodiment.
[FIG. 3] FIG. 3 is a diagram showing an example of information data according to the present example embodiment.
[FIG. 4] FIG. 4 is a conceptual diagram showing an example of a movable region according to the present example embodiment.
[FIG. 5] FIG. 5 is a conceptual diagram showing another example of a movable region according to the present example embodiment.
[FIG. 6] FIG. 6 is a flowchart of one cycle of each robot according to the present example embodiment.
[FIG. 7] FIG. 7 is a diagram showing an example of the movement of a plurality of robots according to the present example embodiment according to the present example embodiment.
[FIG. 8] FIG. 8 is a flowchart showing the processing of a robot whose movement is hindered according to the present example embodiment.
[FIG. 9] FIG. 9 is a flowchart showing the processing of a robot that has received data in which a reply is necessary according to the present example embodiment.
[FIG. 10] FIG. 10 is a flowchart showing the processing of a robot that has received data in which a reply is not necessary according to the present example embodiment.
[FIG. 11] FIG. 11 is a schematic block diagram of a robot according to a second example embodiment.
[FIG. 12] FIG. 12 is a schematic block diagram of a movement control device according to each example embodiment.

EXAMPLE EMBODIMENT

<First Example Embodiment>

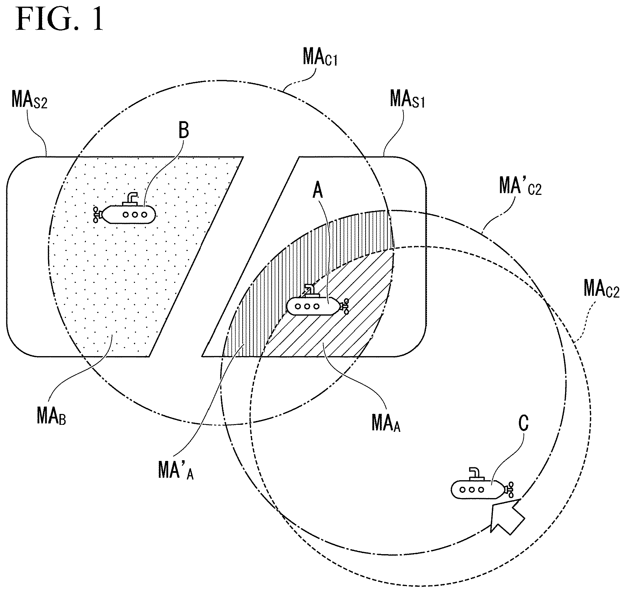

FIG. 1 is a schematic diagram of a system according to a first example embodiment.

In the diagram, the system includes robot A, robot B, and robot C. Robot A, robot B, and robot C (which are each referred to as robots 1) are each capable of moving and communicating with each other. The region enclosed by the solid line $MA_{S1}$ is the region in which robot A is capable of moving, and represents the region in which a collision does not occur with robot B. The region enclosed by the solid line $MA_{S2}$ is the region in which robot B is capable of moving, and represents the region in which a collision does not occur with robot A. The region enclosed by the chain line $MA_{C1}$ represents the region in which communication is possible between robot A and robot B. The region enclosed by the chain line $MA_{C2}$ represents the region in which communication is possible between robot A and robot C.

Each of the robots 1 stores a movable region in which it can move. The movable region is an area in which the robots do not collide with each other, and can communicate with each other. In other words, the movable region represents a region in which a certain robot can move without colliding with another robot, and without interrupting communication with the other robot. However, the movable region may represent an area in which a certain robot can move without colliding with another robot and without interrupting communication with the system. Even when two robots in the system cannot communicate directly with each other, communication in the system will not be interrupted if communication is possible through one or more another robots.

In FIG. 1, robot A stores the movable region $MA_A$ for robot A. Robot B stores the movable region $MA_B$ for robot B.

When communication of the entire system can be maintained as a result of robot A maintaining communication with robot B and robot C, the movable region $MA_A$ is, for example, the region in which the region $MA_{S1}$, the region $MA_{C1}$, and the region $MA_{C2}$ overlap. That is to say, the movable region $MA_A$ is the region in which robot A will not collide with robot B, and can communicate with robot B and robot C. The movable region $MA_B$ is, for example, the region in which the region $MA_{S2}$ and the region $MA_{C1}$ overlap. That is to say, the movable region $MA_B$ is the region in which robot B will not collide with robot A, and can communicate with robot A.

The robot 1 performs movement control for moving toward a target direction while remaining in a stored movable region. The robot 1 determines whether or not communication with the other robots 1 is necessary. The robot 1 communicates with the other robots and calculates the movable region from the information received from the other robots.

For example, robot A compares robot B and robot C, and determines that communication with robot C, which is restricting the movement of robot A, is necessary. Robot A communicates with the other robot C and calculates the movable region for robot A from the information received from the other robot C. In FIG. 1, as a result of robot C moving, the region in which robot A and robot C can communicate moves from the region $MA_{C2}$ received the previous time to the region $MA'_{C2}$ received this time. As a result, robot A can sometimes change the movable region for robot A to a larger movable region (the region in which the region $MA_{S1}$, the region $MA_{C1}$, and the region $MA'_{C2}$ overlap) obtained by adding the movable region $MA'_A$ (the region hatched with vertical lines) generated with the movement of the region $MA'_{C2}$ to the movable region $MA_A$, which expands the movable region.

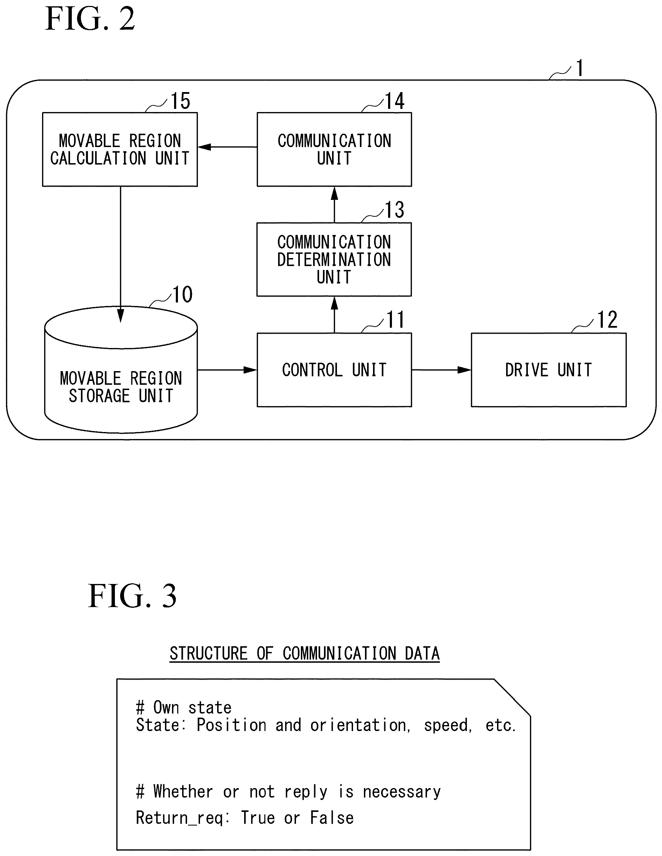

FIG. 2 is a schematic block diagram of a robot according to the present example embodiment. A single robot 1 in the system includes a movable region storage unit 10, a control unit 11, a drive unit 12, a communication determination unit 13, a communication unit 14, and a movable region calculation unit 15. In addition to these components, the robot 1 may include at least one component included in a robot, such as a drive unit that moves the robot 1, an imaging unit such as a camera, an output unit that outputs audio or a display, or a gripping portion that grips objects.

The movable region storage unit 10 stores the region in which the robot 1 is capable of moving. For example, the movable region may be inside a circle with a radius of 5 with coordinates (10, 0) as the center point, a region that is a distance of 2 or more from a straight line with an incline of 60 degrees that passes through the point (7, 0), or a region in which these regions overlap. The coordinates are a coordinate system recognized by the robot 1 in advance, and the incline may be an argument in polar coordinates (the angle formed between the x axis and the straight line). Furthermore, the length unit of the coordinates may be meters or centimeters. When the robot 1 is capable of moving in three dimensions, for example, the movable region may be inside a sphere with a radius of 5 with coordinates (10, 0) as the center point, a region that is a distance of 2 or more from a plane that passes through the point (7, 0) and is perpendicular to the vector (1, 1, 1), or a region in which these regions overlap. The movable region is not limited to being represented by a circle, a spherical surface, a straight line, or a plane, and may also be a polygon, a curved surface, an ellipse, a polyhedron, or the like.

The movable region is configured such that, as a result of the robot 1 itself remaining in the movable region, the communication with the other robots 1 is maintained without colliding with the other robots 1. The details of the movable region will be described below when describing the movable region calculation unit 15. When it is necessary for each robot 1 to maintain communication with two or more another robots 1 without colliding, the movable region storage unit 10 stores, for each of the other robots 1, a region in which communication is maintained without colliding with the other robot 1 as the movable region. In this case, for example, the movable region is assigned a tag that identifies the other robot 1.

For example, assume that a multi-agent system includes three robots, namely robot A, robot B, and robot C, each of which is a robot 1. At this time, the information stored in the movable region storage unit 10 in robot A is, for example, (B, Q), and (C, Q'). Here, B and C in the first term in the parentheses are tags indicating robot B and robot C, respectively. Q in the second item is the movable region for robot A, and indicates the region in which robot A can communicate with robot B without colliding with robot B. Q' is the movable region for robot A, and indicates the region in which robot A can communicate with robot C without colliding with robot C.

Therefore, the information (B, Q) indicates that robot A only needs to remain in the movable region Q in order for robot A to maintain communication with robot B without colliding with robot B. The information (C, Q') indicates that robot A only needs to remain in the movable region Q' in order A to maintain communication with robot C without colliding with robot C.

The control unit 11 controls the movement of the robot 1. The control unit 11, for example, calculates a control input that controls the robot to move toward a destination. For example, the control input is the coordinates of the destination of the robot 1.

Furthermore, the control unit 11 corrects the control input so that the robot 1 remains in the movable region that is stored in the movable region storage unit 10. The correction of the control input for causing the robot 1 to remain in the region is realized by considering the boundary line (or surface) between the inside and outside of the movable region as an obstacle, and applying an algorithm that avoids the obstacle.

As a specific example, assume that the information stored in the movable region storage unit 10 is (B, Q), (C, Q'), and (D, Q") for robot A. The control unit 11 determines the control input such that robot A remains in all of the stored movable regions. That is to say, the control unit 11 determines the control input such that robot A remains in the regions represented by the regions Q, Q', and Q".

The drive unit 12 drives and moves the robot 1 according to a control based on the control input of the control unit 11. The drive unit 12 can also be said to be a steering device or a propulsion device. The drive unit 12 is, for example, a motor, a wheel, a shaft, a screw, or the like.

The communication determination unit 13 determines whether or not it is necessary for robot A to communicate with the other robots 1. The criteria of the determination (also referred to as the determination criteria) is whether or not the movable region for robot A needs to be updated. As will be described later, when communication is performed between a plurality of robots 1, the movable region for each robot 1 is updated. Therefore, at a timing that it becomes necessary to update the movable region for the robot subjected to control by the control unit 11 (for example, robot A), the communication determination unit 13 determines that communication is necessary with the other robots (for example, robot B, robot C, and robot D).

For convenience of the description, it is assumed that the robot subjected to control by the control unit 11 is "robot A". However, the processing executed by the control unit of robot A is similarly executed in the other robots (for example, robot B, robot C, and robot D).

The determination criteria of whether or not it is necessary to update the movable region for robot A uses, for example, an evaluation value that represents the extent to which the movement of robot A is restricted due to the constraint of remaining in the movable region for robot A. At this time, the communication determination unit 13 receives, from the control unit 11, a control input for robot A to move toward the destination, and a control input obtained after correcting the control input such that robot A remains in the movable region. Then, the communication determination unit 13 sets an evaluation value that represents the difference between the original control input and the corrected control input.

An example of the evaluation method and the determination criteria will be described using a specific example.

Assume that the original control input vector is u, and the corrected control input vector is u'. At this time, the communication determination unit 13 calculates an evaluation value representing the difference between the two control inputs, for example, as $\|u-u'\|$ (where $\|a\|$ represents the magnitude (2 norm) of a). Then, when the evaluation value is larger than a predetermined reference value, the communication determination unit 13 determines that the movement is significantly restricted due to the movable region, and determines that communication is necessary. In other cases, that is to say, when the difference between the original control input and the corrected control input is less than or equal to the reference value, the communication determination unit 13 determines that it is not necessary to perform communication. Therefore, the predetermined reference represents a reference that determines whether or not communication is necessary (that is to say, whether or not a need exists for communication).

In addition to determining whether or not a need exists for communication, the communication determination unit 13 may also determine which of the other robots 1 it is necessary for robot A to communicate with. This determination may, for example, be performed by the following procedure. First, it is assumed that the communication determination unit 13 executes the processing according to the same algorithm that the control unit 11 uses to calculate the control input.

When it is determined that communication is necessary, the communication determination unit 13 recalculates the corrected control input for each of the other robots (for example, robot B, robot C, and robot D) one at a time by ignoring the movable region corresponding to the other robot A. For example, when the communication determination unit 13 of robot A ignores the movable region corresponding to robot B, a control input that ignores the region Q for robot B and causes robot A to remain in the region represented by the region Q' for robot C and the region Q" for robot D is calculated as the corrected control input. The communication determination unit 13 similarly calculates corrected control inputs for those cases where the movable regions corresponding to robots C and D are ignored.

Then, the communication determination unit 13 compares the original control input and the corrected control inputs that have been calculated by ignoring the robots 1 one at a time. The communication determination unit 13 specifies the robot 1 that is ignored when the difference between the original control input and the corrected control input is the smallest, as the robot 1 with which communication is necessary.

For example, assume that the original control input is (2,0) and the corrected control input is (1,0). Furthermore, assume that the corrected control input is information for robot A to remain in the region represented by regions Q, Q', and Q" (the region in which the region Q, the region Q', and the region Q" overlap). It is assumed that (B, Q), (C, Q'), and (D, Q") are stored in the movable region storage unit 10.

At this time, the communication determination unit 13 calculates the control input for robot A to remain in the region represented by the region Q' for robot C and the region Q" for robot D. The communication determination unit 13 calculates the control input for robot A to remain in the region represented by the region Q for robot B and the region Q" for robot D. The communication determination unit 13 calculates the control input for robot A to remain in the region represented by the region Q for robot B and the region Q' for robot C. It is assumed that the control inputs calculated as a result of such processing are (1,0), (1.5,0), and (1,0), respectively. In this case, the control input (1.5,0) is closest to the original control input (2,0). Therefore, the communication determination unit 13 transmits information to robot C, which is not considered when (1.5, 0) is calculated.

Here, calculating the corrected control input for robot A by ignoring the movable region relating to a certain robot 1 (for example, robot C) corresponds to communicating with robot C, updating the movable region for robot A, and confirming what happens to the movement of robot A if the updated movable region does not hinder the movement of robot A. Therefore, when the original control input for robot A and the corrected control input obtained when robot C is ignored are the closest together, it indicates that by updating the movable region corresponding to robot C, there is a possibility that the movement of robot A will be the least hindered.

The communication unit 14 transmits and receives information with respect to the other robots 1 (for example, robot B, robot C, and robot D). The communication unit 14 transmits information at a timing in which the communication determination unit 13 determines that communication is necessary. On the other hand, the communication unit 14 is always ready to receive information. The information data to be communicated (hereunder, referred to as "communication data") is information that is necessary when calculating the movable region, and for example, is a tag representing the destination robot 1, the position and speed of the transmission side robot 1, and a flag indicating the need for a reply.

FIG. 3 is a diagram showing an example of communication data according to the present example embodiment.

In the example shown in the diagram, the communication data includes information representing the position, orientation, and speed of the transmission side robot 1, and the presence or absence (flag) of the need for a reply. Furthermore, the communication data is associated with a tag representing the transmission side robot 1.

The components of the information will now be described.

The tag representing the destination robot 1 is used to specify the communication partner. In the case of wireless communication, the information transmitted by the communication unit 14 of the transmission side robot 1 reaches all of the robots 1 within an effective communication distance from the transmission side robot 1. Therefore, the transmission side robot 1 adds a tag representing the destination robot 1 to the communication data. It is necessary for the communication unit 14 of the reception side robot 1 to realize transmission and reception with a specific partner by checking the destination tag, and then accepting the communication data if it is for itself, and if not, rejecting (ignoring) the communication data.

The position and speed of the robot 1 is information that is used in the calculation of the movable region. However, the information necessary to calculate the movable region is determined according to the motion model of the robot 1. Specifically, when a certain region is set, the information necessary to determine whether it is possible to remain in the region is the information required to calculate the movable region.

For example, assume that the robot 1 has a motion model that is capable of immediately stopping on the spot. In this case, the information necessary to calculate the movable region is the position. This is because, if the movable region that has been set includes the position of the robot 1, the robot 1 can remain in the movable region by immediately stopping at that position. In contrast, the robot 1 cannot stay within the movable region if the movable region that has been set does not include the position of the robot 1. Therefore, if the robot 1 has information about the position, the robot 1 can determine whether or not it can remain in the movable region based on whether the movable region includes the position.

On the other hand, if the robot 1 has a motion model that takes time to stop, the information necessary to calculate how far the robot 1 will move before stopping is the position and speed. In this case, for example, the communication determination unit 13 determines whether or not it is possible to remain in the movable region that has been set by the following procedure. First, the communication determination unit 13 uses the current position and speed to calculate the trajectory until the robot 1 stops after applying the brakes. If the movable region includes the entire trajectory, the communication determination unit 13 determines that the robot 1 can remain in the movable region. Therefore, the communication determination unit 13 can determine whether or not the robot 1 can remain in the movable region, from information about the position and speed of the robot 1.

In a robot 1 having a more complex motion model, information such as the acceleration of the robot 1 may be required as the information to be communicated.

The flag indicating the need for a reply is information representing either a true or false binary value. The communication determination unit 13 of the robot 1 that has received the information determines that a reply is necessary if the flag is set to true, and that a reply is not necessary if the flag is set to false. When the robot 1 receives the information, if the flag indicating the need for a reply is set to true in the information data, the communication unit 14 of the robot 1 transmits information to the transmitting robot 1. The information transmission is performed regardless of the determination of the communication determination unit 13. That is to say, even if the communication determination unit 13 determines that information transmission is not necessary, if it is necessary to reply to the received data, the communication unit 14 transmits the information.

The method of determining the value of the flag indicating the need for a reply is as follows.

1) If the communication determination unit 13 determines that information transmission is necessary and information is to be transmitted, the value of the flag is true.
2) If information is transmitted as a reply to received data, the value of the flag is false.

In 2), the reason why information is transmitted even though a reply is not necessary is that the current transmission itself is a reply and no further communication is necessary. Furthermore, the communication unit 14 discards the replied reception data at a timing in which the reply is completed.

The movable region calculation unit 15 calculates, for example, a movable region for robot A from the information received by the communication unit 14, and updates the region stored in the movable region storage unit 10 with the calculated movable region. The algorithm (processing) that calculates the movable region takes the states of the plurality of robots 1 as an input, and for example, outputs the movable region for robot A. Furthermore, it is assumed that the algorithm (processing) that calculates the movable region of each robot 1 is the same. That is to say, it is assumed that the algorithm returns the same output for the same input. In other words, the algorithm does not have randomness. The algorithm (processing) that calculates the movable region may also be different among a plurality of robots.

An example of an algorithm that calculates the movable region will be described. The movable region calculation unit 15 executes the processing according to the algorithm (processing procedure).

The inputs of the algorithm are an own state (for example, of robot A) and the state of the receiving robot 1 (for example, robot C). Here, the state of the robot 1 is information such as the position and speed that is included in the communication data as described above with reference to FIG. 3. The information represents information about the robot that is necessary for calculating the movable region for robot A.

The movable region calculation unit 15 calculates, from the input information, a movable region for avoiding a collision, and a movable region for maintaining communication, respectively. The conditions of each of the movable regions are described below.

· Condition of movable region for avoiding collision

A region that has two regions separated by a safe distance $D_s$ or more, and that enables only one robot 1 to remain in each region. However, the distance between the regions represents the shortest distance among the distances between the points when one point is selected from each region.

· Condition of movable region for maintaining communication

A region in which the distance between two arbitrary points in the region is less than or equal to an effective communication distance Dc, in which two robots 1 can both remain inside.

The definitions of the safe distance $D_s$ and the effective communication distance $D_c$ are shown below. When the distance between the robots 1 is greater than or equal to the safe distance $D_s$, a collision will not occur. The communication is maintained when the distance between the robots 1 is less than or equal to the effective communication distance Dc. When the condition of the movable region for avoiding collision is met, a collision does not occur because, according to the condition, the distance between the two robots 1 will be greater than or equal to $D_s$ regardless of where the robots 1 are in the region. Furthermore, when the condition of the movable region for maintaining communication is met, communication is maintained because, according to the condition, the distance between the two robots 1 will be less than or equal to $D_c$ regardless of where the robots 1 are in the region.

In the algorithm for calculating the movable region, a movable region for avoiding collision and a movable region for maintaining communication are respectively calculated, and the region where these overlap is calculated as the movable region. However, it is not limited to this. If there is no need to maintain communication with the partner robot 1 or the like, the movable region for avoiding collision may be output as the movable region.

Moreover, the respective calculated movable regions satisfy each of the conditions and prevent the movement of the robot 1 from being hindered as much as possible. For example, a control barrier function can be used as a reference value to determine how much the movement is likely to be hindered. The control barrier function has a function called a barrier function, and when the barrier function is 0 or more, a desired constraint is satisfied. Furthermore, the larger the value of the barrier function, the more margin there is to meet the constraint condition.

An example of an algorithm that calculates the movable region will be described using a specific example.

It is assumed that the robot can immediately stop and can move freely in any direction. The state of the robot 1 that is input at this time may be only the position of the robot 1. It is also assumed that the barrier function is a barrier function B(x, o) for avoiding obstacles.

[Expression 1]

$$B(x, o) = \|x - o\|$$

Here, x represents the position of the robot 1. o represents the position of the obstacle. $\|x\text{-}o\|$ represents the distance between the robot 1 and the obstacle. The movable region calculation unit 15 uses the value calculated according to the processing represented by the barrier function to determine the evaluation value representing the extent to which the movement of the robot 1 is hindered as follows.

[Expression 2]

$$\min_{o \in X \backslash Q} \min\{B(x_1, o), B(x_2, o)\}$$

X represents the entire space in which the robot 1 can move. Q represents a candidate of the movable region. Moreover, $x_1$ and $x_2$ represent the respective positions of two robots 1. The evaluation value represents the shorter of the shortest distances before the two robots 1 exit the region Q. Therefore, when the movable region is updated to Q, the shortest movement causes one of the robots 1 to reach the edge of the movable region at the point to which it has moved by the evaluation value, and the movement is hindered in order to remain in the region. If the evaluation value is small, the movement of the robot 1 will be immediately hindered in the worst case, and if the evaluation value is large, the movement of the robot 1 is unlikely to be hindered even in the worst case.

As a result of solving the following optimization problem using an algorithm (processing procedure) that calculates the movable region, the movable region calculation unit 15 is capable of calculating the movable region that is least likely to hinder the movement of the robot 1 even in the worst case.

[Expression 3]

$$\max_{Q \in \Phi} \min_{o \in X \backslash Q} \min\{B(x_1, o), B(x_2, o)\}$$

Here, the set $\Phi$ is a set of movable regions that satisfy the conditions of the movable region described above. In the present example, the states $x_1$ and $x_2$ of the robot 1 represent only the position, and the barrier function represents the distance between the robot 1 and the obstacle. However, it is not limited to this. The settings may be changed according to the motion model of the robot 1. Even when the settings are changed, the movable region calculation unit 15 can similarly calculate the optimal movable region by solving the optimization problem above.

In an example of the present example embodiment, the solution to each optimization problem is determined as follows.

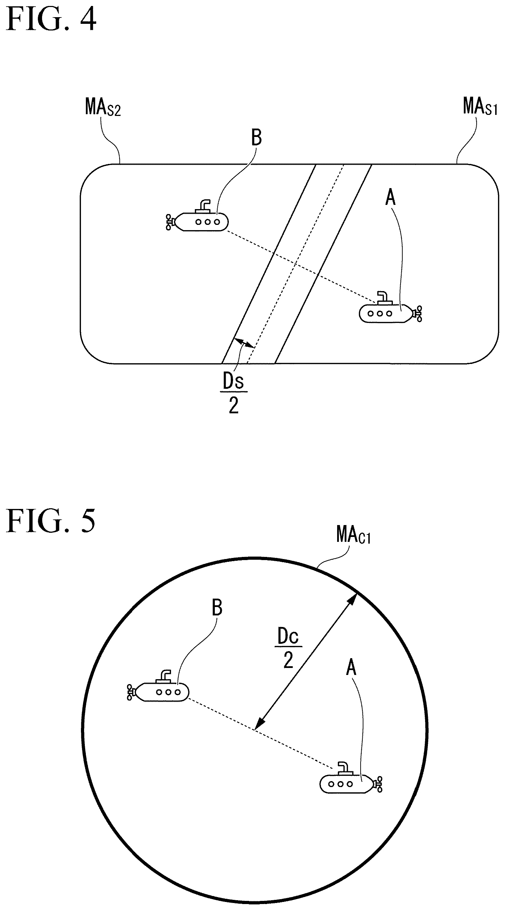

FIG. 4 is a conceptual diagram showing an example of a movable region according to the present example embodiment. The diagram represents the optimal movable region to avoid a collision. It is assumed that robot A and robot B are each set with a movable region for avoiding a collision, being a region that is at least a distance of $(D_s/2)$ away from an orthogonal bisector (plane) of a line segment connecting a position of itself and the partner robot.

FIG. 5 is a conceptual diagram showing another example of a movable region according to the present example embodiment. The diagram represents the optimal movable region for maintaining communication. It is assumed that robot A and robot B are each set with a movable region for maintaining communication, being a region inside a circle (sphere) of diameter $D_c$ that is centered at the midpoint of the position of itself and the position of the partner robot.

The movable region calculation unit 15 outputs, according to the algorithm (processing procedure) that calculates the movable region, the region where the two regions shown in FIG. 4 and FIG. 5 overlap as the movable region. For example, the processing procedure is the same as the processing of the example shown in FIG. 1 that outputs the movable region $MA_B$ and the region in which the region $MA_{S1}$ and the region $MA_{C1}$ overlap as the movable regions.

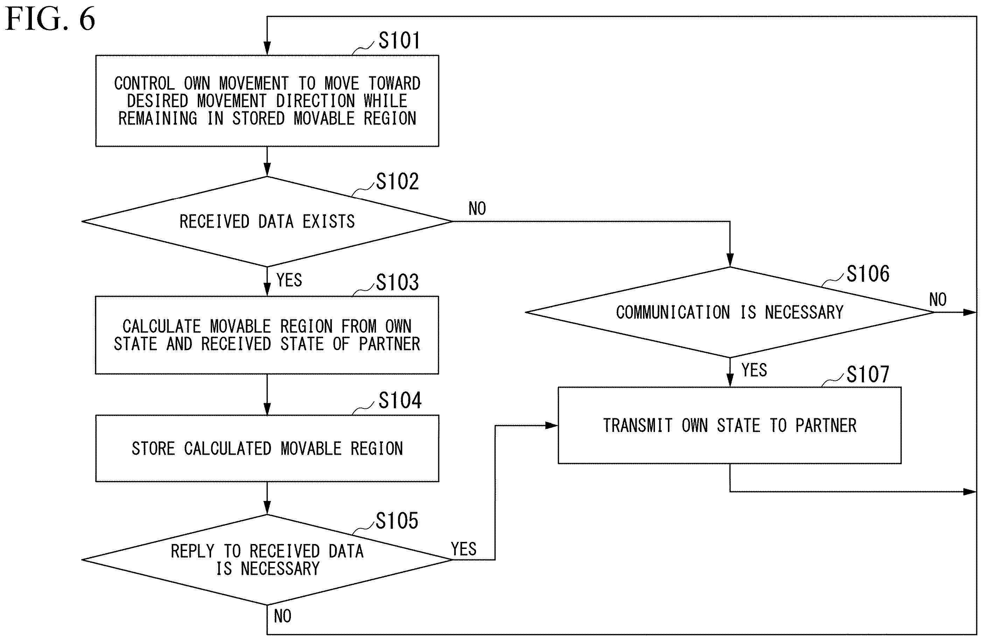

FIG. 6 is a flowchart of one cycle of each robot 1 according to the present example embodiment. The robots 1 continue to move in real time, and continue repeating the flow of one cycle of the flowchart until they are stopped due to a switch being turned off or the like.

The control flow of the robot 1 will be described according to FIG. 6.

First, the control unit 11 of the robot 1 determines a control input for movement (step S101). At this time, the control unit 11 reads the movable region stored in the movable region storage unit 10, and determines a control input that enables the robot 1 to remain in the read movable region.

Then, the communication unit 14 checks whether or not communication data (illustrated in FIG. 3, also referred to as "received data") exists that has been transmitted by another robot (step S102).

If received data exists (Yes in step S102), the movable region calculation unit 15 calculates the movable region based on the state of the robot 1 included in the received data (that is to say, the partner robot), and the current state of the own robot 1 (step S103). The movable region calculation unit 15 stores the calculated movable region in the movable region storage unit 10 (step S104). Furthermore, the communication unit 14 refers to the received data (illustrated in FIG. 3), and checks whether or not a reply is necessary (step S105).

If a reply is necessary (Yes in step S105), the communication unit 14 transmits information about the own robot 1 (illustrated in FIG. 3) to the other robot (step S107). Then, the robot 1 ends one cycle of the flow (returns to step S101). If a reply is necessary (No in step S105), the robot 1 ends the flow of one cycle (returns to step S101).

On the other hand, if received data (illustrated in FIG. 3) does not exist (No in step S102), the communication determination unit 13 determines whether or not it is necessary to transmit information about the own robot 1 to the other robot (step S106). If it is necessary to transmit information (Yes in step S106), the communication unit 14 transmits information about the own robot 1 to the other robot (step S107). Then, the robot 1 ends one cycle of the flow (returns to step S101). If it is not necessary to transmit information (No in step S106), the robot 1 ends the flow of one cycle (returns to step S101).

The flow by which collision avoidance is achieved in the present example embodiment with a small number of communications will be described using a specific example.

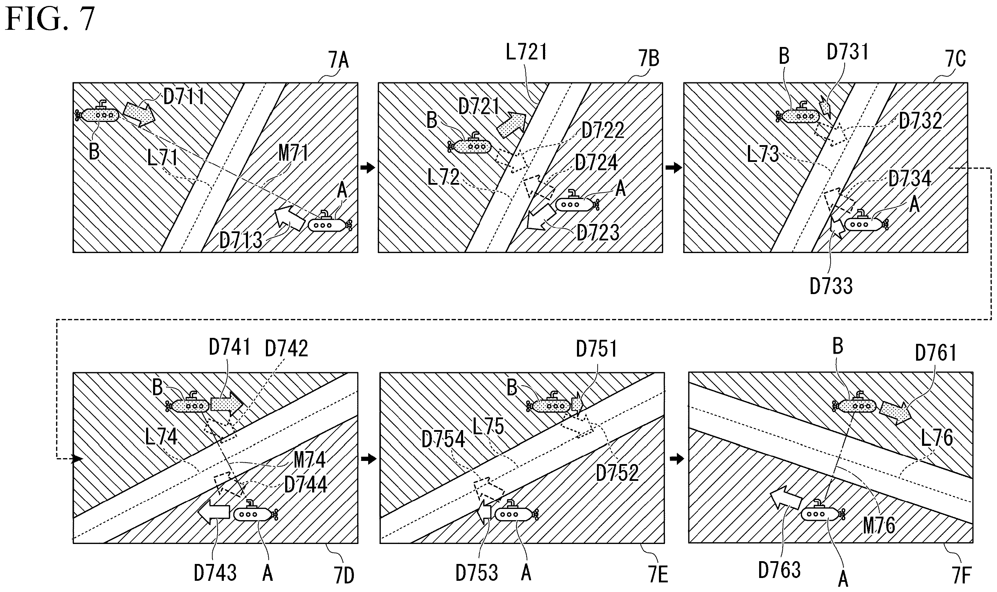

FIG. 7 is a diagram showing an example of the movement of a plurality of robots according to the present example embodiment. In FIG. 7, a flow is shown in which two robots A and B (robots 1) are crossing each other. The left diagonally hatched area and the right diagonally hatched area represent the movable regions of each of the two robots A and B. The movable regions are set as regions that are greater than or equal to a distance $(D_s/2)$ away from the straight line represented by a chain line L7 (the chain lines labeled as chain lines L71 to L76 in each of 7A to 7F).

7A to 7F are arranged in chronological order, and each of 7A to 7F represents the position and movable region of robots A and B at that time. Furthermore, the arrows in 7A to 7F represent the advancing directions of the robots A and B. Although not shown in FIG. 7, the movable region is actually divided by a circular shape outside the illustrated region. This reflects the movable region for maintaining communication. However, in the present example, it is omitted because it does not affect the movement of robots A and B.

In the example shown in 7A of FIG. 7, robot A is moving toward the direction of the position of robot B. Robot B is moving toward the direction of the position of robot A. Furthermore, for convenience, the movable regions in 7A are calculated from the positions of the robots A and B in 7A. That is to say, the one-dot chain line is a line segment M71 connecting the positions of the two robots A and B. The chain line L71 is an orthogonal bisector of the line segment M71, and the movable regions are calculated as regions that are at least a distance $(D_s/2)$ away from the straight line represented by the chain line L71.

In the example shown in 7B of FIG. 7, both the movement of robot A and the movement of robot B are starting to be hindered in order to each remain in the movable region. The original control inputs are represented by dotted arrows D722 and D724, and the corrected (actual) control inputs to remain in the movable region are represented by arrows D721 and D723. Robot A on the upper left wants to move to the lower right, but in order to stay in the movable region, it moves to the upper right along the solid line L721 representing the boundary of the region.

In 7C of FIG. 7, the two robots A and B are approaching the boundary of the movable region, so they are almost unable to move in the directions of arrow D732 and arrow D734, respectively. At this time, because the difference between the original control input and the corrected control input becomes larger than a reference value, communication is performed between robots A and B. In the example of 7C, the original control inputs for robots A and B are represented by arrows D732 and D734, respectively. The corrected control inputs for robots A and B are represented by arrows D731 and D733, respectively.

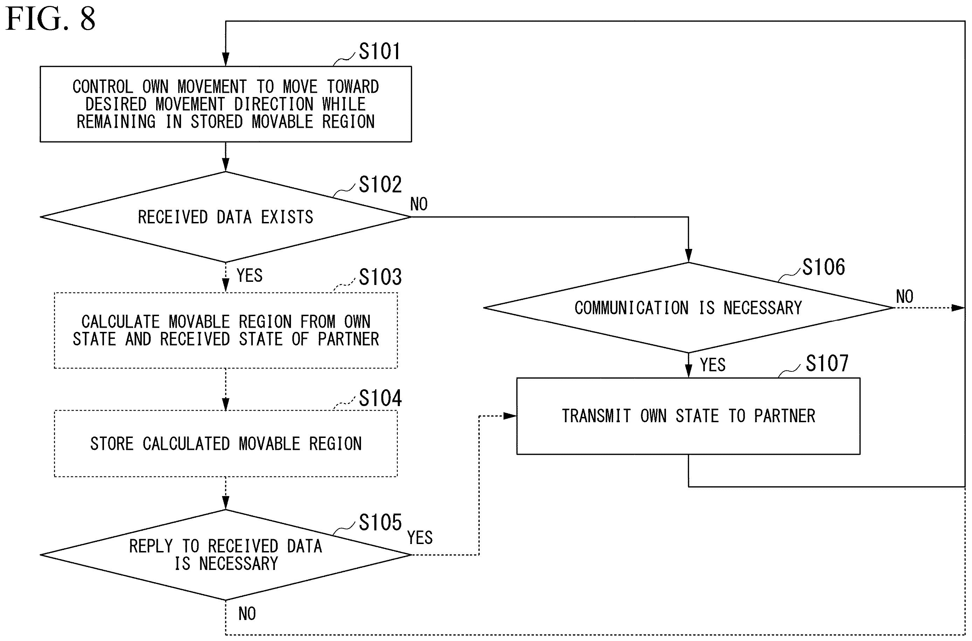

Here, it is assumed that the difference between the original control input and the corrected control input becomes larger than the reference value for robot B before robot A, and the communication determination unit 13 determines that communication is necessary. The flow of processing in robot B at this time is shown in FIG. 8. The sections indicated by the solid line frames and the solid lines in FIG. 8 represent the processing executed by robot B on the upper left. Specifically, robot B performs the processing of steps S101, S102, S106, and S107.

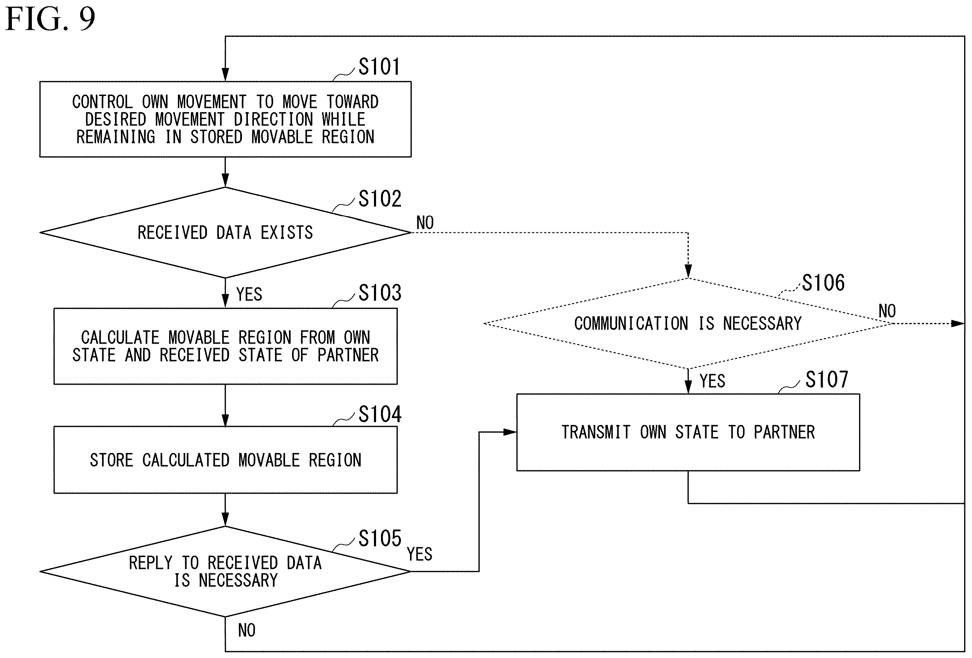

The actual time of one cycle of the flow of robots A and B is short. Therefore, after robot B completes the processing, robot A receives the information transmitted by robot B. The flow of processing in robot A at this time is shown in FIG. 9. The sections indicated by the solid line frames and the solid lines in FIG. 9 represent the processing executed by robot A on the lower right. Specifically, robot A performs the processing of steps S101, S102, S103, S104, S105, and S107.

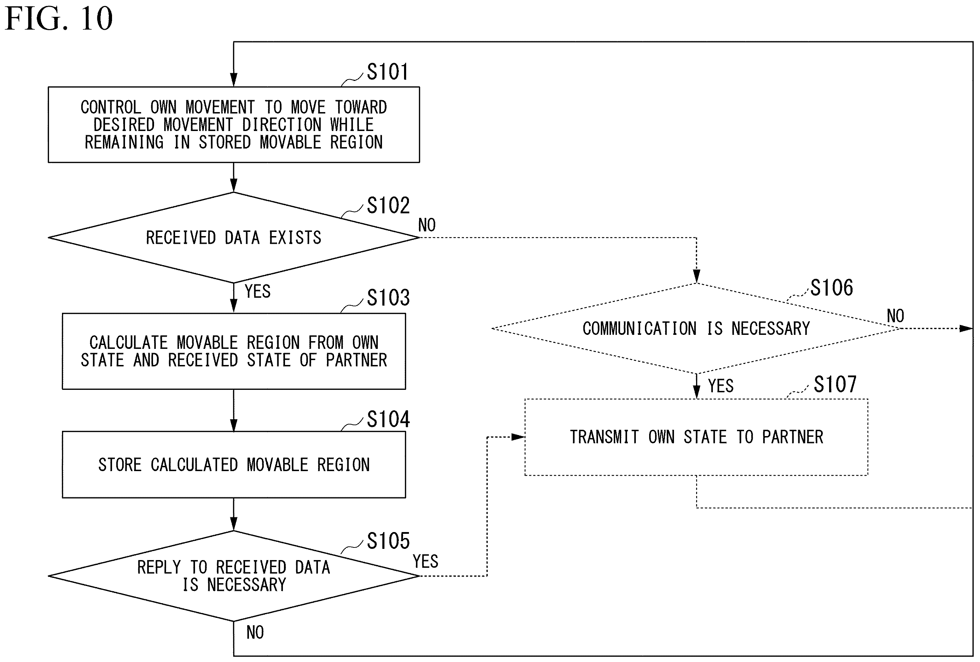

After robot A completes the processing of FIG. 9, robot B receives the information transmitted by robot A. The flow of processing in robot B at this time is shown in FIG. 10. The sections indicated by the solid line frames and the solid lines in FIG. 10 represent the processing executed by robot B on the upper left. Specifically, robot B performs the processing of steps S101, S102, S103, S104, and S105.

Because the communication processing is short compared to the movement speed of robots A and B, there is no need to consider the movement of robots A and B during the communication time. Robot B and robot A calculate the movable region using the positions of the two robots A and B as input. The algorithm that calculates the movable region provides one output for a certain input. Therefore, the two robots A and B calculate the same movable region storage unit and update the movable region stored in the movable region storage unit 10 to the calculated movable region.

7D in FIG. 7 represents the movable region at the timing after a round-trip communication is performed. In the example shown in 7D, the movable region of the two robots A and B has been updated.

In 7E of FIG. 7, the two robots A and B are approaching the boundary of the updated movable region and are prevented from moving in the direction of arrow D754 and the direction of arrow D752, respectively. At this time, because the difference between the original control input represented by arrows D752 and D754 and the corrected control input represented by arrows D751 and D753 becomes larger than a reference value, communication is performed between robots A and B. Therefore, a round-trip communication occurs again between robot A and robot B. Then, the movable region is updated in robot A and robot B.

7F in FIG. 7 shows the state of the movable region after it has been updated. The two robots A and B can move toward the movement direction of the target without being hindered by the movable region.

As described above, in the example shown in FIG. 7, the two robots A and B do not collide with each other by only performing a total of three round-trip communications.

As described above, in the present example embodiment, the control unit 11 performs movement control for moving toward a target direction while remaining in a movable region representing a communicable region without a collision between the robot and another robot. The movable region calculation unit 15 calculates, from the state of the robot and the state of another robot, a first region where the robot and the other robot will not collide, a second region where the robot and the other robot can communicate, and a movable region in which the first region and the second region overlap.

As a result, in the system according to the present example embodiment, it is possible to achieve collision avoidance and the maintaining of communication between the robots 1 while suppressing the amount of communication between the robots 1.

Furthermore, in the present example embodiment, the movable region storage unit 10 stores the movable region in which the own robot 1 is capable of moving. The control unit 11 performs movement control such that the robot 1 moves toward the target direction while remaining in the movable region. The communication determination unit 13 determines whether or not communication is necessary with at least one of the other robots 1 based on the state of the other robots 1 and the state of the own robot 1. If the communication determination unit 13 determines that communication is necessary, the communication unit 14 communicates with the other robots 1. The movable region calculation unit 15 calculates the movable region from the information received about the other robots.

As a result, in the system according to the present example embodiment, it is possible to achieve collision avoidance and the maintaining of communication between the robots 1 while suppressing the amount of communication between the robots 1.

Furthermore, in the present example embodiment, the movable region calculation unit 15 calculates one or both of a first region and a second region from the state of the other robots received by the communication unit 14 and the state of the own robot 1, and calculates one of the calculated regions or a region in which both regions overlap as the movable region. Here, the first region is a region that has two regions separated by a safe distance or more, and that enables only one robot 1 to remain in each region (a movable region for preventing a collision). The second region is a region in which the distance between two arbitrary points in the region is less than or equal to an effective communication distance, in which two robots 1 can both remain inside (a movable region for maintaining communication).

Furthermore, in the present example embodiment, the control unit 11 calculates the control input for moving toward a target. The communication determination unit 13 compares a first control input when the constraint of remaining in the movable region is removed (control input before correction), and a second control input when remaining in the movable region (control input after correction), and determines based on the comparison result whether it is necessary to communicate with at least one of the other robots.

As a result, the robot 1 can maintain communication without colliding with the plurality of robots 1 while suppressing the amount of communication between the robots 1, and can sometimes also widen the movement range.

Furthermore, in the present example embodiment, the communication determination unit 13 determines that communication with at least one of the other robots 1 is necessary when the difference between the first control input and the second control input is greater than a threshold.

In addition, in the present example embodiment, the movable region calculation unit 15 calculates the movable region of the own robot 1 based on the state of the other robots 1 and the own robot 1, and stores the calculated movable region in the movable region storage unit 10. If it is determined that communication is necessary, the communication determination unit 13 specifies the other robot 1 that is most restricting the movable region of the own robot 1. The communication determination unit 13 instructs the communication unit 14 to communicate with the specified another robot. The communication unit 14 communicates with the other robot specified by the communication determination unit 13.

As a result, the robot 1 can perform collision avoidance and maintain communication between the robots 1 while suppressing the amount of communication between the robots 1, and can sometimes also widen the movement range from the result received from the specified another robot 1.

<Second Example Embodiment>

Hereunder, a second example embodiment will be described.

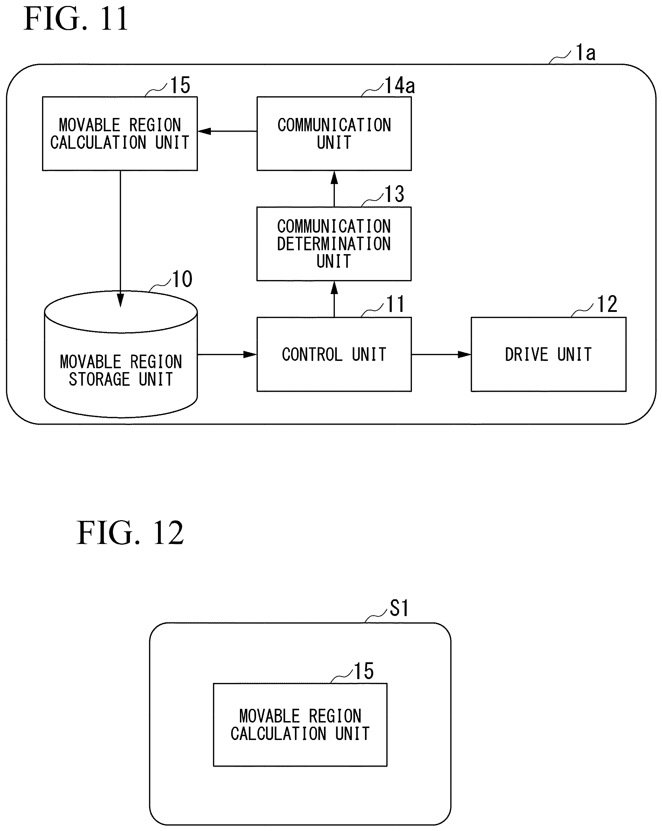

FIG. 11 is a schematic block diagram of a robot 1a according to a second example embodiment. The robot 1a differs from the robot 1 of the first example embodiment in that the communication unit 14 has been replaced with the communication unit 14a.

The communication unit 14a of the second example embodiment exchanges the following communication data. Specifically, the communication data includes information such as a tag representing the destination robot 1, the position and speed of the transmission side robot 1, a flag representing the need for a reply, and the movable region. The communication data may include information different from the information described above. The communication data does not have to include all of the data described above.

The communication data of the second example embodiment includes the communication data such as that described above in the first example embodiment, and the "movable region". The data of the movable region is used at the time of a reply, and is not used at any other timing.

The specific processing will be described. If the robot 1a determines that communication is necessary using the communication determination unit 13 and transmits information, the movable region in the communication data may be empty. The robot 1a that receives this communication data calculates the movable region by executing the same processing as the processing described in the first example embodiment. Then, at the time of a reply, the robot 1a includes the calculated movable region in the communication data, and conversely sets the position and speed information of the transmission side robot 1a to be empty, and transmits the communication data.

The robot 1a that receives the communication data (for example, the communication unit 14a, but may also be the movable region calculation unit 15) stores the movable region in the received communication data in the movable region storage unit 10, and updates the movable region. That is to say, by transmitting the movable region calculated in one robot 1a to another robot 1a, the other robot 1a does not have to calculate the movable region. The other robot 1a updates the movable region using the movable region in the received communication data.

The data representing the movable region may, for example, record the vertices of a polygon in a clockwise fashion, record the center coordinates of a circle, or record a point a straight line passes through and a gradient. The region represented by the vertices of a polygon becomes an internal area when the vertices in the data are successively connected. The region represented by the center coordinates of a circle is the inside of the circle having a diameter $D_c$ centered at the center coordinates in the data. Furthermore, the region represented by a point a straight line passes through and a gradient is a region which is at least a distance $(D_s/2)$ away from the straight line.

In this manner, in the present example embodiment, the communication unit 14a acquires communication data including the movable regions of the other robots 1a, and stores the movable region in the movable region storage unit 10. As a result, in the system according to the present example embodiment, when updating the movable region, it is sufficient for at least one robot 1a to calculate the movable region, and the movable region can be updated without waste.

<Third Example Embodiment>

In the third example embodiment, the setting of the movable region is expanded. In the first example embodiment and the second example embodiment, it is assumed that the movable region is a region that does not change over time. In the third example embodiment, it is assumed that the movable region is a region that changes over time. Furthermore, in each of the example embodiments, the movable region may include both a region in which the movable region does not change, and a region in which the movable region changes over time. In addition, at a certain point in time, the movable region may be set to one type of region among these regions, and at another point in time, the movable region may be set to the other type of region or to both types of regions.

For example, a circular movable region that changes over time is expressed by the center coordinates and a moving speed of the center coordinates. For example, assume that in the xy coordinate system, the center coordinates are (0, 0) and the speed of the center coordinates is (1 m/s, 0 m/s). This represents a movable region within a circle with a diameter $D_c$ that moves 1 m per second in the positive x-axis direction from the origin (0, 0). Here, m represents meters, and m/s represents meters per second.

In addition, for example, when the movable region is expressed by a straight line, changes over time can be expressed by adding angular velocity to the point that the straight line passes through and the gradient of the straight line. This means, therefore, that the straight line rotates by an angular velocity according to a change in time about the point that the straight line passes through. As a result of the change in the gradient of the straight line due to the rotation, changes in the movable region over time are expressed.

A movable region that changes over time is useful when the movement direction of the robot 1 and the robot 1a can be predicted to some extent, such as when the robot 1 and the robot 1a move in formation. In other words, if a movable region that changes over time is calculated such that the predicted movement of the robot 1 and the robot 1a is not hindered, communication is not necessary as long as the robot 1 and the robot 1a move as predicted. As a result, the amount of communication is reduced.

FIG. 12 is a schematic block diagram of a movement control device S1 according to each example embodiment. The movement control device S1 is installed on a robot. In addition to the configuration shown in FIG. 12, the movement control device S1 may include at least one of the configurations shown in FIG. 2 or FIG. 11, or other configurations.

The movable region calculation unit 15 calculates, from the state of a first robot and the state of a second robot, a first region where the first robot and the second robot will not collide, a second region where the first robot and the second robot can communicate, and the movable region in which the first region and the second region overlap.

In the example embodiments described above, the robot may transmit information to the other robots that relates to adjustment of the movable region, or adjustment or stopping of the communication range. For example, a first robot may transmit information inquiring to another second robot whether or not the second robot can be moved toward the direction of the first robot, and move the second robot in that direction if the movement is possible. In addition, the first robot may cause the other second robot to expand the communication range toward the position of the first robot or toward the direction of the control input by expanding the communication range (strengthening the radio waves or increasing the number of antennas), changing the beam direction of the radio waves, or the like.

Furthermore, the first robot may transmit information inquiring to the other second robot whether or not to end the communication, and stop the communication with the second robot if the communication is to be ended. As a result, the first robot can set the movable region by ignoring the other second robot with which communication has been stopped, and the movement range can sometimes be expanded. Then, if the first robot and the other second robot approach each other (for example, if the radio wave strength increases from the point in time in which communication is ended), the communication may be restarted.

The functions of the robot and the movement control device S1 of the example embodiments described above may be realized by a computer. In this case, a program for realizing the functions of the device may be recorded in a computer-readable recording medium, and the functions may be realized by a computer system reading and executing the program recorded on the recording medium. The "computer system" referred to here includes an OS (operating system) and hardware such as a peripheral device. Furthermore, the "computer-readable recording medium" refers to a portable medium such as a flexible disk, a magnetic optical disk, a ROM (read only memory), or a CD-ROM (compact disc read-only memory), or a storage device such as a hard disk built into a computer system. In addition, the "computer-readable recording medium" may include those that dynamically retain the program for a short time, such as a communication line that transmits the program via a network such as the Internet or a communication line such as a telephone line, and those that retain the program for a fixed time, such as the volatile memory inside a computer system serving as a server or a client in this case. Moreover, the program may be one capable of realizing some of the functions described above. In addition, the functions described above may be realized in combination with a program already recorded in the computer system.

Furthermore, the program described above may be transmitted from a computer system storing the program in a storage device, or the like, to another computer system via a transmission medium or by a transmission wave in the transmission medium. Here, the "transmission medium" that transmits the program refers to a medium having an information transmission function, such as a network (communication network) such as the Internet, or a communication line (communication wire) such as a telephone line. Moreover, the program described above may be for realizing some of the functions mentioned above. In addition, the program may be one that realizes the functions mentioned above by being combined with a program already recorded on the computer system, as a so-called difference file (difference program).

Also, the configurations of the robots 1 and 1a, and the movement control device S1 may be realized by a plurality of devices. The plurality of devices may realize the configurations by performing communication. The plurality of devices may include a user terminal.

The example embodiments of the present invention have been described in detail above with reference to the drawings.

Industrial Applicability

The present disclosure can be used, for example, in mobile robots, management systems of mobile robots, cars, ships, airplanes, submarines, drones, and the integrated circuits (for example, CPUs (central processing units) and communication chips) installed therein, and the programs executed therein.

Description of Reference Symbols

1, 1a, A, B, C Robot, 10 Movable region storage unit, 11 Control unit, 13 Communication determination unit, 14, 14a Communication unit, 15 Movable region calculation unit

**Claims**

1.   A mobile robot (1) comprising:

a control unit (11) that performs movement control for moving toward a target direction while remaining in a movable region representing a communicable region without a collision between the mobile robot (1) and another robot (1); and
a movable region calculation unit (15) that calculates, from a state of the mobile robot (1) and a state of the other robot (1), a first region where the mobile robot (1) and the other robot (1) do not collide, a second region where the mobile robot (1) and the other robot (1) are capable of communicating, and a movable region in which the first region and the second region overlap,
wherein the control unit (1) calculates a control input for moving toward the target,
**characterized in that**
the mobile robot (1) further comprises:

a communication determination unit (13) that determines, based on the state of the mobile robot (1) and the state of the other robot (1), whether or not communication is necessary with at least one of the other robot (1); and
a communication unit (14) that, when it is determined by the communication determination unit (13) that communication is necessary, performs communication with the at least one of the other robot (1), and
the communication determination unit (13) compares a first control input in a case of a constraint of remaining in the movable region being removed and a second control input in a case of remaining in the movable region, and determines, based on a comparison result, whether or not communication is necessary with at least one of the other robot (1).

2.   The mobile robot (1) according to claim 1,

wherein the first region is a region including two regions that are separated by at least a safe distance, only one robot (1) being allowed to remain in each of the regions, and
the second region is a region in which a distance between two arbitrary points in the region is less than or equal to an effective communication distance, both of the two robots (1) being allowed to remain in the region.

3.   The mobile robot (1) according to claim 1, wherein the communication determination unit (13) determines that communication with the at least one of the other robot (1) is necessary when a difference between the first control input and the second control input is greater than a threshold.

4.   The mobile robot (1) according to claim 1,

wherein the communication determination unit (13) specifies another robot (1) that is most restricting the movable region of the mobile robot (1) when it is determined that communication is necessary, and
the communication unit (14) performs communication with the other robot (1) specified by the communication determination unit (13).

5.   The mobile robot (1) according to claim 4,
wherein the communication determination unit (13) specifies, for each other robot (1), the other robot (1) with which communication is required based on a control input in a case where the other robot (1) is excluded.

6.   A method comprising:

performing movement control for moving toward a target direction while remaining in a movable region representing a communicable region without a collision between a mobile robot (1) and another robot (1); calculating, from a state of the mobile robot (1) and a state of the other robot (1), a first region where the mobile robot (1) and the other robot (1) do not collide, a second region where the mobile robot (1) and the other robot (1) are capable of communicating, and the movable region in which the first region and the second region overlap; and

calculating a control input for moving toward the target,

**characterized in that**

the method further comprises:

determining, based on the state of the mobile robot (1) and the state of the other robot (1), whether or not communication is necessary with at least one of the other robot (1); and

when it is determined that communication is necessary, performing communication with the at least one of the other robot (1), and

a first control input in a case of a constraint of remaining in the movable region being removed and a second control input in a case of remaining in the movable region are compared, and it is determined that, based on a comparison result, whether or not communication is necessary with at least one of the other robot (1).

7. A program product that executes processing of:

performing movement control for moving toward a target direction while remaining in a movable region representing a communicable region without a collision between a mobile robot (1) and another robot (1); calculating, from a state of the mobile robot (1) and a state of the other robot (1), a first region where the mobile robot (1) and the other robot (1) do not collide, a second region where the mobile robot (1) and the other robot (1) are capable of communicating, and a movable region in which the first region and the second region overlap; and calculating a control input for moving toward the target,

**characterized in that**

the program further executes processing of:

determining, based on the state of the mobile robot (1) and the state of the other robot (1), whether or not communication is necessary with at least one of the other robot (1); and

when it is determined that communication is necessary, performing communication with the at least one of the other robot (1), and

a first control input in a case of a constraint of remaining in the movable region being removed and a second control input in a case of remaining in the movable region are compared, and it is determined that, based on a comparison result, whether or not communication is necessary with at least one of the other robot (1).

**Patentansprüche**

1. Mobiler Roboter (1), umfassend:

eine Steuereinheit (11), die eine Bewegungssteuerung zum Bewegen in Richtung zu einer Zielrichtung durchführt, während sie in einem beweglichen Bereich verbleibt, der einen kommunizierbaren Bereich darstellt, ohne dass es zu einer Kollision zwischen dem mobilen Roboter (1) und einem anderen Roboter (1) kommt; und eine Berechnungseinheit (15) für bewegliche Bereiche, die aus einem Zustand des beweglichen Roboters (1) und einem Zustand des anderen Roboters (1) einen ersten Bereich berechnet, in dem der mobile Roboter (1) und der andere Roboter (1) nicht kollidieren, einen zweiten Bereich, in dem der mobile Roboter (1) und der andere Roboter (1) in der Lage sind, miteinander zu kommunizieren, und einen beweglichen Bereich, in dem sich der erste Bereich und der zweite Bereich überlappen,

wobei die Steuereinheit (1) eine Steuereingabe zum Bewegen in Richtung zum Ziel berechnet,

**dadurch gekennzeichnet, dass**

der mobile Roboter (1) weiterhin folgendes umfasst:

eine Kommunikationsbestimmungseinheit (13), die basierend auf dem Zustand des mobilen Roboters (1) und dem Zustand des anderen Roboters (1) bestimmt, ob eine Kommunikation mit wenigstens einem der anderen Roboter (1) notwendig ist oder nicht; und

eine Kommunikationseinheit (14), die dann, wenn durch die Kommunikationsbestimmungseinheit (13) bestimmt wird, dass eine Kommunikation notwendig ist, eine Kommunikation mit dem wenigstens einen der anderen Roboter (1) durchführt, und

die Kommunikationsbestimmungseinheit (13) eine erste Steuereingabe für den Fall, dass eine Einschränkung eines Verbleibens im beweglichen Bereich aufgehoben wird, und eine zweite Steuereingabe für den Fall eines Verbleibens im beweglichen Bereich vergleicht und basierend auf einem Vergleichsergebnis bestimmt, ob eine Kommunikation mit wenigstens einem der anderen Roboter (1) notwendig ist oder nicht.

2. Mobiler Roboter (1) nach Anspruch 1,

   wobei der erste Bereich ein Bereich ist, der zwei Bereiche enthält, die durch wenigstens einen sicheren Abstand voneinander getrennt sind, wobei nur ein Roboter (1) in jedem der Bereiche verbleiben darf, und
   der zweite Bereich ein Bereich ist, in dem ein Abstand zwischen zwei beliebigen Punkten in dem Bereich kleiner als ein effektiver Kommunikationsabstand oder gleich diesem ist, wobei beide Roboter (1) in dem Bereich verbleiben dürfen.

3. Mobiler Roboter (1) nach Anspruch 1, wobei die Kommunikationsbestimmungseinheit (13) bestimmt, dass eine Kommunikation mit dem wenigstens einen der anderen Roboter (1) notwendig ist, wenn eine Differenz zwischen der ersten Steuereingabe und der zweiten Steuereingabe größer als eine Schwelle ist.

4. Mobiler Roboter (1) nach Anspruch 1,

   wobei die Kommunikationsbestimmungseinheit (13) einen anderen Roboter (1) spezifiziert, der den beweglichen Bereich des beweglichen Roboters (1) am stärksten einschränkt, wenn bestimmt wird, dass eine Kommunikation notwendig ist, und
   die Kommunikationseinheit (14) eine Kommunikation mit dem anderen Roboter (1) durchführt, der durch die Kommunikationsbestimmungseinheit (13) spezifiziert ist.

5. Mobiler Roboter (1) nach Anspruch 4,
   wobei die Kommunikationsbestimmungseinheit (13) für jeden anderen Roboter (1) den anderen Roboter (1), mit dem eine Kommunikation erforderlich ist, basierend auf einer Steuereingabe in einem Fall, in dem der andere Roboter (1) ausgeschlossen ist, spezifiziert.

6. Verfahren, umfassend:

   Durchführen einer Bewegungssteuerung zum Bewegen in Richtung zu einer Zielrichtung, während eines Verbleibens in einem beweglichen Bereich, der einen kommunizierbaren Bereich darstellt, ohne dass es zu einer Kollision zwischen einem mobilen Roboter (1) und einem anderen Roboter (1) kommt;
   aus einem Zustand des beweglichen Roboters (1) und einem Zustand des anderen Roboters (1) Berechnen eines ersten Bereichs, in dem der mobile Roboter (1) und der andere Roboter (1) nicht kollidieren, eines zweiten Bereichs, in dem der mobile Roboter (1) und der andere Roboter (1) in der Lage sind, miteinander zu kommunizieren, und des beweglichen Bereichs, in dem sich der erste Bereich und der zweite Bereich überlappen; und
   Berechnen einer Steuereingabe zum Bewegen in Richtung zum Ziel,
   **dadurch gekennzeichnet, dass**
   das Verfahren weiterhin folgendes umfasst:

   basierend auf dem Zustand des mobilen Roboters (1) und dem Zustand des anderen Roboters (1) Bestimmen, ob eine Kommunikation mit wenigstens einem der anderen Roboter (1) notwendig ist oder nicht; und
   wenn bestimmt wird, dass eine Kommunikation notwendig ist, Durchführen einer Kommunikation mit wenigstens einem der anderen Roboter (1), und
   eine erste Steuereingabe für einen Fall, dass eine Einschränkung des Verbleibens im beweglichen Bereich aufgehoben wird, und eine zweite Steuereingabe für einen Fall eines Verbleibens im beweglichen Bereich verglichen werden und basierend auf einem Vergleichsergebnis bestimmt wird, ob eine Kommunikation mit wenigstens einem der anderen Roboter (1) notwendig ist oder nicht.

7. Programmprodukt, das ein Verarbeiten von folgendem ausführt:

Durchführen einer Bewegungssteuerung zum Bewegen in Richtung zu einer Zielrichtung, während eines Verbleibens in einem beweglichen Bereich, der einen kommunizierbaren Bereich darstellt, ohne dass es zu einer Kollision zwischen einem mobilen Roboter (1) und einem anderen Roboter (1) kommt;

aus einem Zustand des beweglichen Roboters (1) und einem Zustand des anderen Roboters (1) Berechnen eines ersten Bereichs, in dem der mobile Roboter (1) und der andere Roboter (1) nicht kollidieren, eines zweiten Bereichs, in dem der mobile Roboter (1) und der andere Roboter (1) in der Lage sind, miteinander zu kommunizieren, und des beweglichen Bereichs, in dem sich der erste Bereich und der zweite Bereich überlappen; und

Berechnen einer Steuereingabe zum Bewegen in Richtung zu dem Ziel,

**dadurch gekennzeichnet, dass**

das Programm weiterhin ein Verarbeiten von folgendem ausführt:

basierend auf dem Zustand des mobilen Roboters (1) und dem Zustand des anderen Roboters (1) Bestimmen, ob eine Kommunikation mit wenigstens einem der anderen Roboter (1) notwendig ist oder nicht; und

wenn bestimmt wird, dass eine Kommunikation notwendig ist, Durchführen einer Kommunikation mit wenigstens einem der anderen Roboter (1), und

eine erste Steuereingabe für einen Fall, dass eine Einschränkung des Verbleibens im beweglichen Bereich aufgehoben wird, und eine zweite Steuereingabe für einen Fall eines Verbleibens im beweglichen Bereich verglichen werden und basierend auf einem Vergleichsergebnis bestimmt wird, ob eine Kommunikation mit wenigstens einem der anderen Roboter (1) notwendig ist oder nicht.

## Revendications

1. Robot mobile (1) comportant :

   une unité de commande (11) qui réalise une commande de déplacement pour un déplacement vers une direction cible tout en restant dans une région mobile représentant une région de communication sans collision entre le robot mobile (1) et un autre robot (1) ; et

   une unité de calcul de région mobile (15) qui calcule, à partir d'un état du robot mobile (1) et d'un état de l'autre robot (1), une première région où le robot mobile (1) et l'autre robot (1) n'entrent pas en collision, une deuxième région où le robot mobile (1) et l'autre robot (1) sont capables de communiquer, et une région mobile dans laquelle la première région et la deuxième région se chevauchent,

   dans lequel l'unité de commande (1) calcule une entrée de commande pour un déplacement vers la cible,

   **caractérisé en ce que**

   le robot mobile (1) comporte en outre :

   une unité de détermination de communication (13) qui détermine, sur la base de l'état du robot mobile (1) et de l'état de l'autre robot (1), si une communication est nécessaire ou non avec au moins l'autre robot (1) ; et

   une unité de communication (14) qui, lorsqu'il est déterminé par l'unité de détermination de communication (13) que la communication est nécessaire, réalise une communication avec au moins l'autre robot (1), et l'unité de détermination de communication (13) compare une première entrée de commande dans un cas de suppression d'une contrainte de séjour dans la région mobile et une deuxième entrée de commande dans un cas de séjour dans la région mobile, et détermine, sur la base d'un résultat de comparaison, si une communication est nécessaire ou non avec au moins l'autre robot (1).

2. Robot mobile (1) selon la revendication 1,

   dans lequel la première région est une région incluant deux régions qui sont séparées par au moins une distance de sécurité, un seul robot (1) étant autorisé à rester dans chacune des régions, et

   la deuxième région est une région dans laquelle une distance entre deux points arbitraires dans la région est inférieure ou égale à une distance de communication effective, les deux robots (1) étant autorisés à rester dans la région.

3. Robot mobile (1) selon la revendication 1, dans lequel l'unité de détermination de communication (13) détermine que la communication avec au moins l'autre robot (1) est nécessaire lorsqu'une différence entre la première entrée de commande et la deuxième entrée de commande est supérieure à un seuil.

**4.** Robot mobile (1) selon la revendication 1,

dans lequel l'unité de détermination de communication (13) spécifie un autre robot (1) qui restreint le plus la région mobile du robot mobile (1) lorsqu'il est déterminé que la communication est nécessaire, et
l'unité de communication (14) réalise une communication avec l'autre robot (1) spécifié par l'unité de détermination de communication (13).

**5.** Robot mobile (1) selon la revendication 4,
dans lequel l'unité de détermination de communication (13) spécifie, pour chaque autre robot (1), l'autre robot (1) avec lequel la communication est requise sur la base d'une entrée de commande dans un cas où l'autre robot (1) est exclu.

**6.** Procédé comportant :

la réalisation d'une commande de déplacement pour un déplacement vers une direction cible tout en restant dans une région mobile représentant une région de communication sans collision entre un robot mobile (1) et un autre robot (1) ;
le calcul, à partir d'un état du robot mobile (1) et d'un état de l'autre robot (1), d'une première région où le robot mobile (1) et l'autre robot (1) n'entrent pas en collision, une deuxième région où le robot mobile (1) et l'autre robot (1) sont capables de communiquer, et la région mobile dans laquelle la première région et la deuxième région se chevauchent ; et
le calcul d'une entrée de commande pour un déplacement vers la cible,
**caractérisé en ce que**
le procédé comporte en outre :

le fait de déterminer, sur la base de l'état du robot mobile (1) et de l'état de l'autre robot (1), si une communication est nécessaire ou non avec au moins l'autre robot (1) ; et
lorsqu'il est déterminé que la communication est nécessaire, la réalisation d'une communication avec au moins l'autre robot (1), et
une première entrée de commande dans un cas de suppression d'une contrainte de séjour dans la région mobile et une deuxième entrée de commande dans un cas de séjour dans la région mobile sont comparées, et il est déterminé, sur la base d'un résultat de comparaison, si une communication est nécessaire ou non avec au moins l'autre robot (1).

**7.** Produit de programme qui exécute le traitement suivant :

la réalisation d'une commande de déplacement pour un déplacement vers une direction cible tout en restant dans une région mobile représentant une région de communication sans collision entre un robot mobile (1) et un autre robot (1) ;
le calcul, à partir d'un état du robot mobile (1) et d'un état de l'autre robot (1), d'une première région où le robot mobile (1) et l'autre robot (1) n'entrent pas en collision, une deuxième région où le robot mobile (1) et l'autre robot (1) sont capables de communiquer, et une région mobile dans laquelle la première région et la deuxième région se chevauchent ; et
le calcul d'une entrée de commande pour un déplacement vers la cible,
**caractérisé en ce que**
le programme exécute en outre le traitement suivant :

le fait de déterminer, sur la base de l'état du robot mobile (1) et de l'état de l'autre robot (1), si une communication est nécessaire ou non avec au moins l'autre robot (1) ; et
lorsqu'il est déterminé que la communication est nécessaire, la réalisation d'une communication avec au moins l'autre robot (1), et
une première entrée de commande dans un cas de suppression d'une contrainte de séjour dans la région mobile et une deuxième entrée de commande dans un cas de séjour dans la région mobile sont comparées, et il est déterminé, sur la base d'un résultat de comparaison, si une communication est nécessaire ou non avec au moins l'autre robot (1).

FIG. 1

# FIG. 2

# FIG. 3

STRUCTURE OF COMMUNICATION DATA

```
# Own state
State: Position and orientation, speed, etc.


# Whether or not reply is necessary
Return_req: True or False
```

FIG. 4

FIG. 5

FIG. 6

```
                    ┌─────────────────────────────────────────┐
                    │                                  ⌇S101   │
                    │  CONTROL OWN MOVEMENT TO MOVE TOWARD      │
                    │  DESIRED MOVEMENT DIRECTION WHILE         │
                    │  REMAINING IN STORED MOVABLE REGION       │
                    └─────────────────────────────────────────┘
                                       │
                                       ▼                ⌇S102
                         ◇─────────────────────────◇      NO
                         ◇    RECEIVED DATA EXISTS   ◇──────────────┐
                         ◇─────────────────────────◇               │
                                       │ YES    ⌇S103              ▼                    ⌇S106
                    ┌─────────────────────────────────────────┐     ◇───────────────────────────◇   NO
                    │  CALCULATE MOVABLE REGION FROM OWN       │     ◇  COMMUNICATION IS NECESSARY ◇──────►
                    │  STATE AND RECEIVED STATE OF PARTNER     │     ◇───────────────────────────◇
                    └─────────────────────────────────────────┘                  │ YES      ⌇S107
                                       │        ⌇S104                             ▼
                    ┌─────────────────────────────────────────┐     ┌───────────────────────────┐
                    │  STORE CALCULATED MOVABLE REGION         │──┐  │  TRANSMIT OWN STATE TO     │
                    └─────────────────────────────────────────┘  │  │  PARTNER                   │
                                       │        ⌇S105            │  └───────────────────────────┘
                         ◇─────────────────────────◇   YES       │
                         ◇  REPLY TO RECEIVED DATA   ◇────────────┘
                         ◇     IS NECESSARY          ◇
                         ◇─────────────────────────◇
                                       │ NO
```

EP 4 404 017 B1

FIG. 7

EP 4 404 017 B1

FIG. 8

CONTROL OWN MOVEMENT TO MOVE TOWARD
DESIRED MOVEMENT DIRECTION WHILE
REMAINING IN STORED MOVABLE REGION
— S101

RECEIVED DATA EXISTS — S102

NO

YES
— S103

CALCULATE MOVABLE REGION FROM OWN
STATE AND RECEIVED STATE OF PARTNER

COMMUNICATION IS NECESSARY — S106

NO

YES
— S107

— S104

STORE CALCULATED MOVABLE REGION

TRANSMIT OWN STATE TO PARTNER

— S105
YES

REPLY TO RECEIVED DATA
IS NECESSARY

NO

EP 4 404 017 B1

FIG. 9

S101
CONTROL OWN MOVEMENT TO MOVE TOWARD DESIRED MOVEMENT DIRECTION WHILE REMAINING IN STORED MOVABLE REGION

S102
RECEIVED DATA EXISTS — NO

YES S103
CALCULATE MOVABLE REGION FROM OWN STATE AND RECEIVED STATE OF PARTNER

S104
STORE CALCULATED MOVABLE REGION

S105 YES
REPLY TO RECEIVED DATA IS NECESSARY
NO

S106
COMMUNICATION IS NECESSARY — NO

YES S107
TRANSMIT OWN STATE TO PARTNER

EP 4 404 017 B1

FIG. 10

FIG. 10

CONTROL OWN MOVEMENT TO MOVE TOWARD DESIRED MOVEMENT DIRECTION WHILE REMAINING IN STORED MOVABLE REGION — S101

RECEIVED DATA EXISTS — S102
NO
YES

CALCULATE MOVABLE REGION FROM OWN STATE AND RECEIVED STATE OF PARTNER — S103

COMMUNICATION IS NECESSARY — S106
NO
YES

STORE CALCULATED MOVABLE REGION — S104

TRANSMIT OWN STATE TO PARTNER — S107

REPLY TO RECEIVED DATA IS NECESSARY — S105
YES
NO

EP 4 404 017 B1

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021229274 A1

**Non-patent literature cited in the description**

- Multi-objective compositions for collision-free connectivity maintenance in teams of mobile robots. **WANG, L.** ; **AMES, A. D** ; **EGERSTEDT, M**. Decision and Control (CDC), 2016 IEEE 55th Conference on. IEEE., 2016, 2659-2664

- **A. SHINNOH** ; **N. Y. CHONG** ; **G. LEE**. Communication packet loss concealment for pattern generation with robotic swarms. *2015 IEEE International Conference on Advanced Intelligent Mechatronics (AIM)*, 2015, 537-542